# EUROPEAN PATENT APPLICATION

(11) **EP 3 118 680 A1**
(43) Date of publication of application: **18.01.2017**
(21) Application number: 16178956.5
(22) Date of filing: 12.07.2016
(51) Int. Cl.: G03B 21/16

(54) **COOLING METHOD FOR PROJECTOR**

(30) Priority: 17.07.2015 JP 2015143420
(71) Applicant: Funai Electric Co., Ltd., Daito Osaka 574-0013 (JP)
(72) Inventor: IZUKAWA, Shintaro, Daito, Osaka 5740013 (JP); YAMAGIWA, Daisuke, Daito, Osaka 574-0013 (JP); KOSAKA, Norihito, Daito, Osaka 574-0013 (JP)
(74) Representative: Vigand, Philippe

(57) **Abstract**

A projector (1) is provided which includes: a Peltier device (121) having a first surface (121a) in contact with an optical component (100) (heat generating component) and a second surface (121b) in contact with a heat sink (122) (heat dissipating component); and a Peltier device driving unit (123) as a controller that generates a temperature difference between the two surfaces (121a, 121b) of the Peltier device (121) by applying a cyclically changing voltage to the Peltier device (121). The Peltier device driving unit (123) applies to the Peltier device (121) a first voltage in a first of two time periods of a cycle and applies a lower second voltage in the second time period, the first voltage being for transferring heat from the optical component (100) to the heat sink (122) to reduce the temperature of the first surface (121a) below that of the second surface (121b), and the second voltage being for preventing the transfer of heat from the second surface (121b) to the first surface (121a).

## Description

### Field

The present invention relates to projectors and driving methods for projectors, and more specifically to techniques for improving the operating efficiency of Peltier devices used in projectors.

### Background

Conventional techniques for temperature control of an object include the use of a Peltier device to cool or heat the object. One known technique typically includes driving the Peltier device with a pulsed voltage generated by turning a DC power source on and off so that the Peltier device absorbs or releases a desired amount of heat (for example, see Patent Literature (PTL) 1).

### Citation List

### Patent Literature

[PTL 1] WO 2006/067838.

### Summary

### Technical Problem

The drive circuit for driving the Peltier device with a pulsed voltage can be easily assembled, but the operating efficiency of the Peltier device is sacrificed.

The present invention thus has an object to provide a projector including a Peltier device driving device that can cause the Peltier device to operate efficiently.

### Solution to Problem

In order to achieve the above object, according to one aspect of the present invention, a projector includes: an optical component including a light source; a display controller that performs display control; a Peltier device in contact with the optical component; and a controller that applies a first voltage to the Peltier device in a first time period of a cycle and applies a second voltage lower than the first voltage to the Peltier device in a second time period of the cycle.

More specifically, the projector may include: a Peltier device having a first surface in contact with a heat generating component and a second surface in contact with a heat dissipating component; and a controller that generates a temperature difference between the two surfaces of the Peltier device by applying a cyclically changing voltage to the Peltier device. The controller may apply to the Peltier device a first voltage in a first of two time periods of a cycle and a lower second voltage in the second of the two time periods, the first voltage being for transferring heat from the heat generating element to the heat dissipating component to reduce the temperature of the first surface below that of the second surface, and the second voltage being for preventing the transfer of heat from the second surface to the first surface.

Here, the heat generating component may be an optical component including a light source, and the heat dissipating component may be a heat sink. Moreover, the controller may apply to the Peltier device a voltage that switches between the first voltage and the second voltage in a stepped manner. Alternatively, in the second time period, the second voltage applied to the Peltier device by the controller may continuously change between the first voltage and a lower limit voltage.

When the Peltier device is operating, the heat-releasing surface (the second surface) is hotter than the heat-absorbing surface (the first surface). As such, when there is a period in which the supply of power to the Peltier device is completely suspended, such as when the Peltier device is driven with a pulsed voltage, heat flows in reverse from the heat-releasing surface to the heat-absorbing surface. The reverse flow of heat reduces the operating efficiency of the Peltier device 121, and increases the time required to reach thermal equilibrium.

In contrast, with the above-described configuration, since the second voltage is applied to the Peltier device in the second time period, the reverse flow of heat from the heat-releasing surface to the heat-absorbing surface of the Peltier device can be prevented and the operating efficiency of the Peltier device can be improved.

Moreover, the second voltage may be greater than 0 volts in a first cycle and 0 volts in a second cycle.

Energy can be saved with this configuration since a first cycle which is for preventing the reverse flow of heat and a second cycle which is for reducing the drive voltage 0 volts are used.

Moreover, in the second time period, when the first surface and the second surface are the same temperature, a rise in temperature equal to a rise in temperature generated by the heat generating component may be generated in the first surface.

The operating efficiency of the Peltier device can be improved with this configuration since the reverse flow of heat from the second surface to the first surface of the Peltier device can be completely prevented in the second time period.

Moreover, in the second time period, the first surface of the Peltier device is maintained at a given temperature.

The temperature of the Peltier device can be maintained with this configuration since the reverse flow of heat from the second surface to the first surface of the Peltier device can be completely prevented in the second time period and cooling by an amount of temperature increase of the heat generating component itself is achieved in the second time period. This means energy can be saved by, for example, using a Peltier device having a lower ability-and thus a lower cost-since the cooling ability required in the first time period is reduced, or by reducing the drive current and/or reducing the time.

Moreover, according to one aspect of the present invention, a driving method for a projector including a Peltier device includes: applying a first voltage to the Peltier device in a first time period of a cycle and applying a second voltage lower than the first voltage to the Peltier device in a second time period of the cycle.

More specifically, the driving method may be a driving method for a printer including: a Peltier device having a first surface in contact with a heat generating component and a second surface in contact with a heat dissipating component, wherein a temperature difference is generated between the two surfaces of the Peltier device by applying a cyclically changing voltage to the Peltier device, the method including: applying to the Peltier device a first voltage in a first of two time periods of a cycle and a lower second voltage in the second of the two time periods, the first voltage being for transferring heat from the heat generating element to the heat dissipating component to reduce the temperature of the first surface below that of the second surface, and the second voltage being for preventing the transfer of heat from the second surface to the first surface.

The Peltier device can be efficiently driven with this method since the reverse flow of heat from the second surface to the first surface in the Peltier device can be prevented in the second time period.

### Advantageous Effects

With the projector according to the present invention, when driving the Peltier device included in the projector, a second voltage that prevents the reverse flow of heat through the Peltier device (i.e., the flow of heat from the heat-releasing surface of the Peltier device to the heat-absorbing surface) is applied in a time period corresponding to an off time period in which the supply of power to the Peltier device is completely suspended in conventional driving with a pulsed voltage. Accordingly, the operating efficiency of the Peltier device improves since the reverse flow of heat in the Peltier device is prevented.

### Brief Description of Drawings

[FIG. 1]

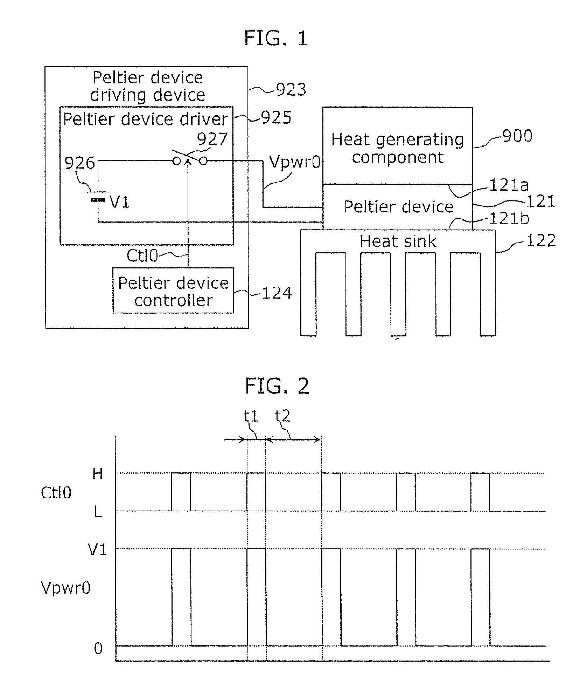

   FIG. 1 is a block diagram illustrating one example of a configuration of a Peltier device driving device as a comparative example.
[FIG. 2]
   FIG. 2 illustrates waveforms of signals and represents one example of operations performed by the Peltier device driving device according to the comparative example.
[FIG. 3]

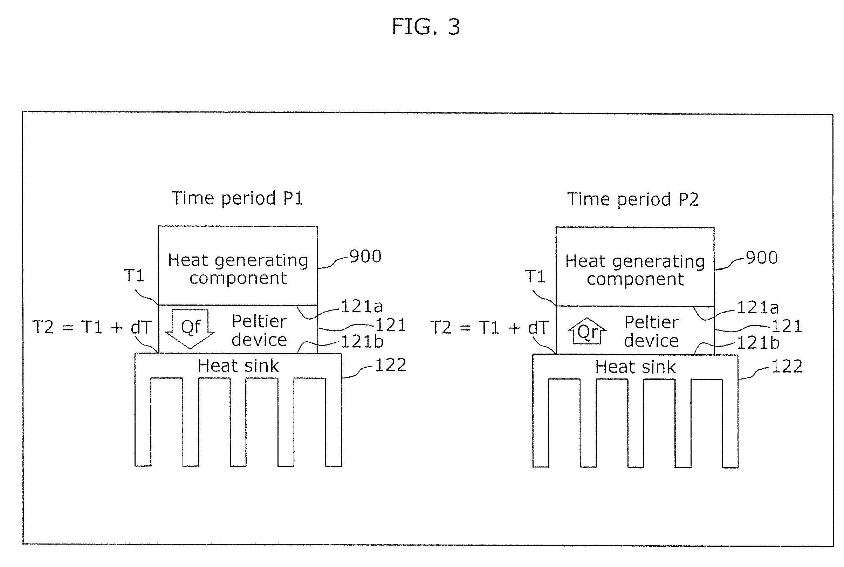

   FIG. 3 illustrates a problem with the Peltier device driving device according to the comparative example.
[FIG. 4]

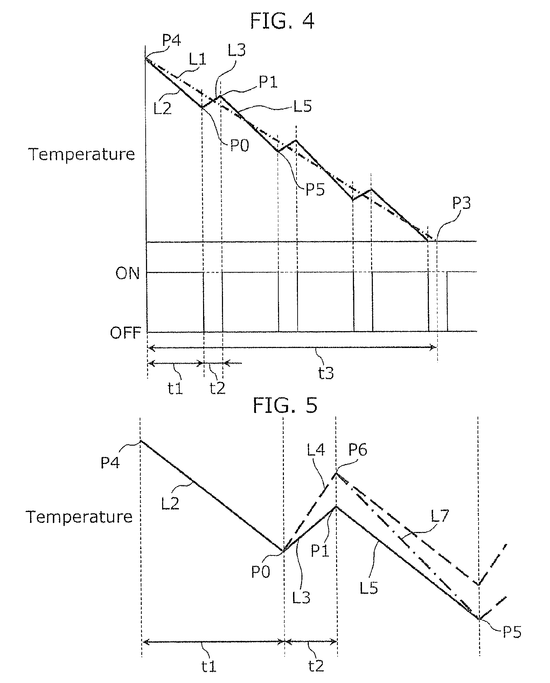

   FIG. 4 is a graph illustrating one example of temperature change in the Peltier device according to the comparative example.
[FIG. 5]
   FIG. 5 is a graph illustrating one example of temperature change in the Peltier device according to the comparative example.
[FIG. 6]

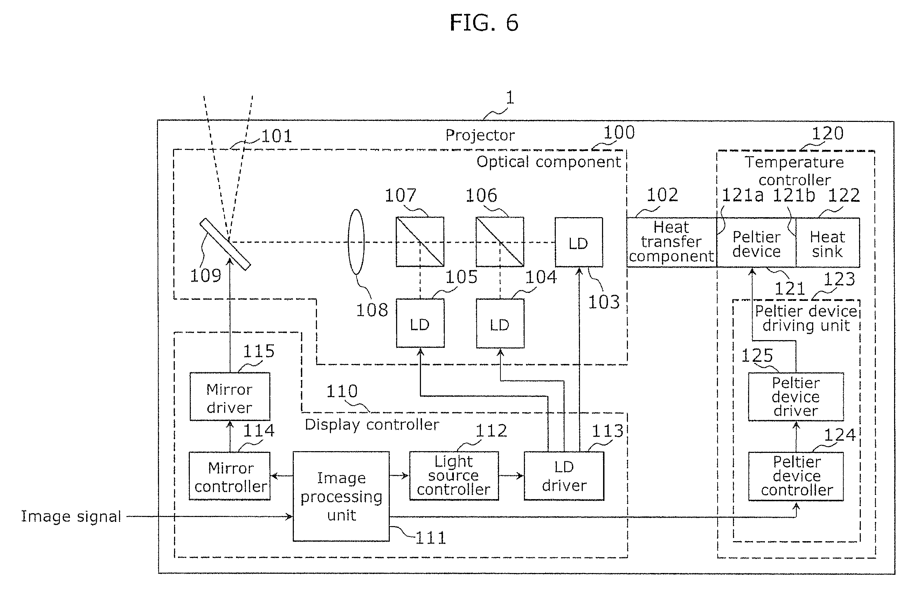

   FIG. 6 is a block diagram illustrating one example of a functional configuration of the projector according to Embodiment 1.
[FIG. 7]

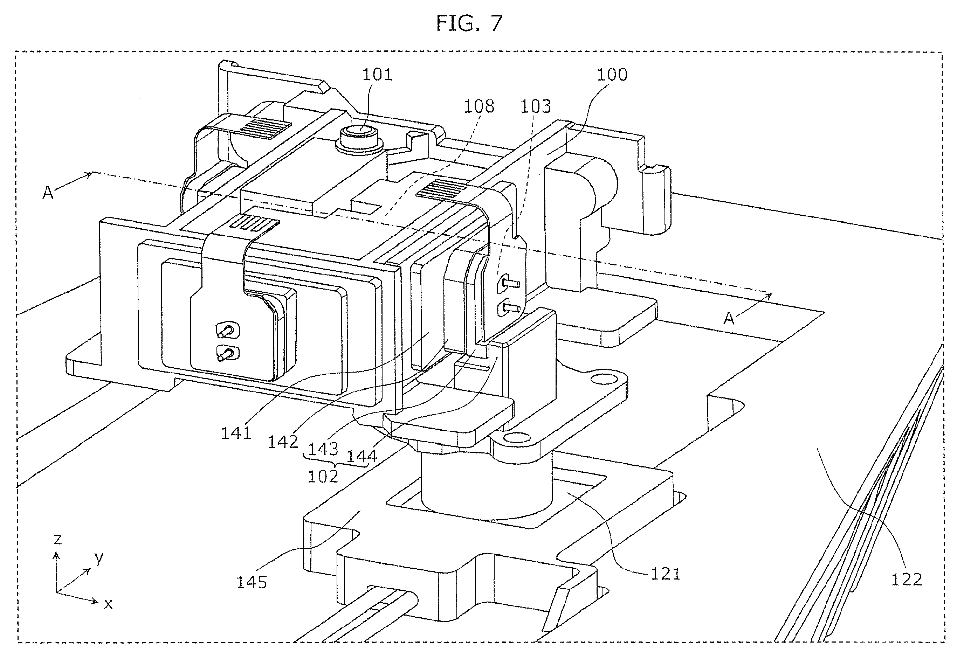

   FIG. 7 is a perspective view of one example of the external appearance of the relevant components of the projector according to Embodiment 1.
[FIG. 8]

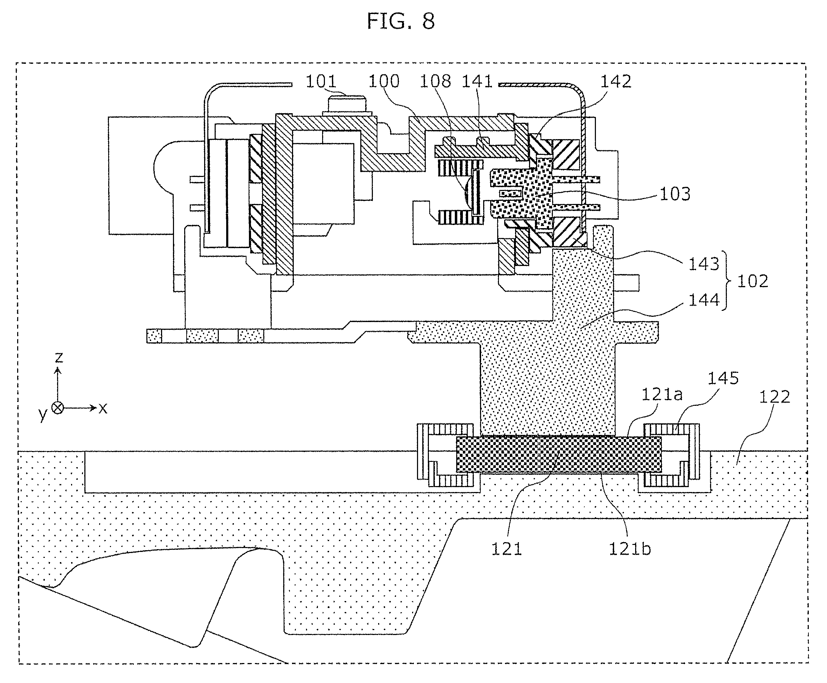

   FIG. 8 is a cross sectional view illustrating one example of the relevant components of the projector according to Embodiment 1.
[FIG. 9]

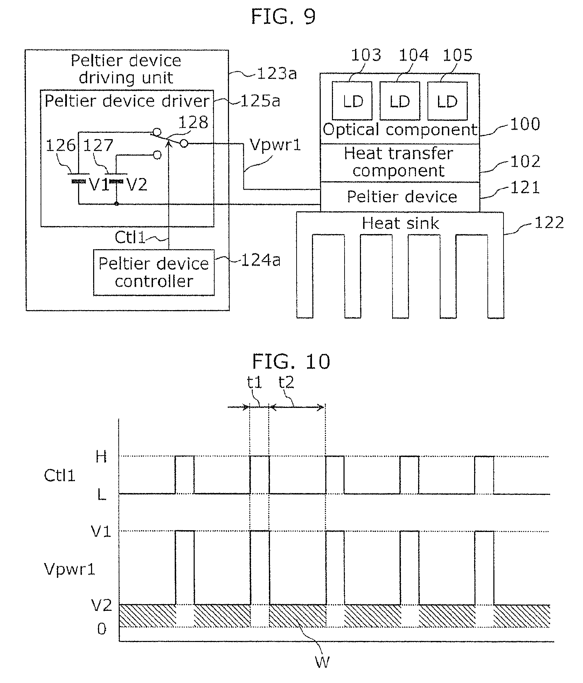

   FIG. 9 is a block diagram illustrating one specific example of a configuration of the Peltier device driving unit according to Embodiment 1.
[FIG. 10]
   FIG. 10 illustrates waveforms of signals and represents one example of operations performed by the Peltier device driving unit according to Embodiment 1.
[FIG. 11]

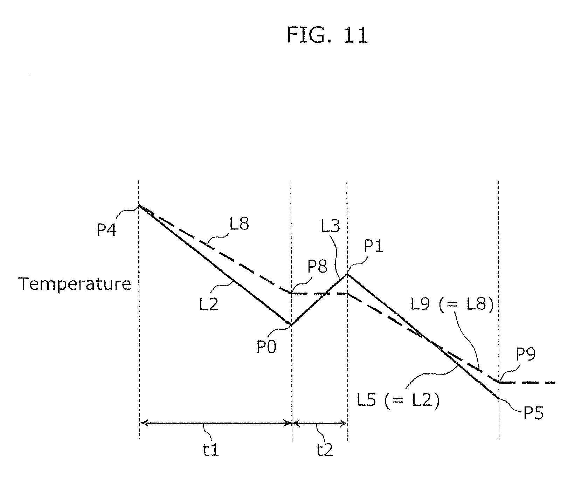

   FIG. 11 is a graph illustrating one example of temperature change in the Peltier device according to Embodiment 1.
[FIG. 12]

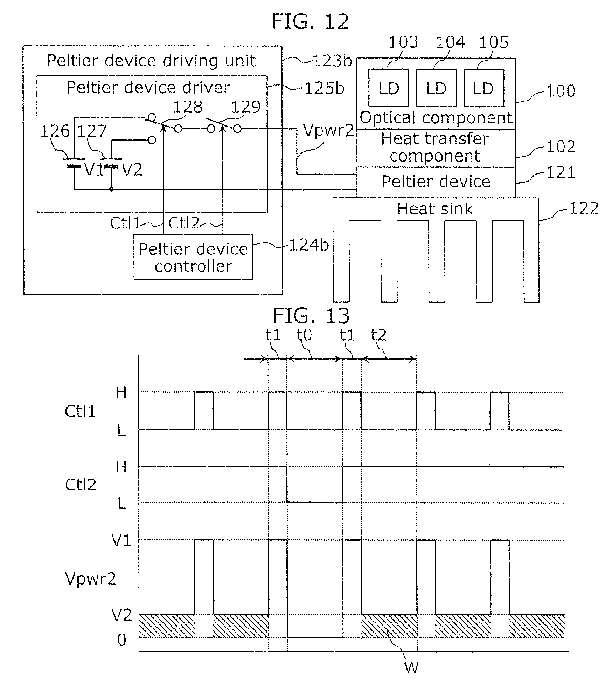

   FIG. 12 is a block diagram illustrating one specific example of a configuration of the Peltier device driving unit according to a variation of Embodiment 1.
[FIG. 13]
   FIG. 13 illustrates waveforms of signals and represents one example of operations performed by the Peltier device driving unit according to a variation of Embodiment 1.
[FIG. 14]

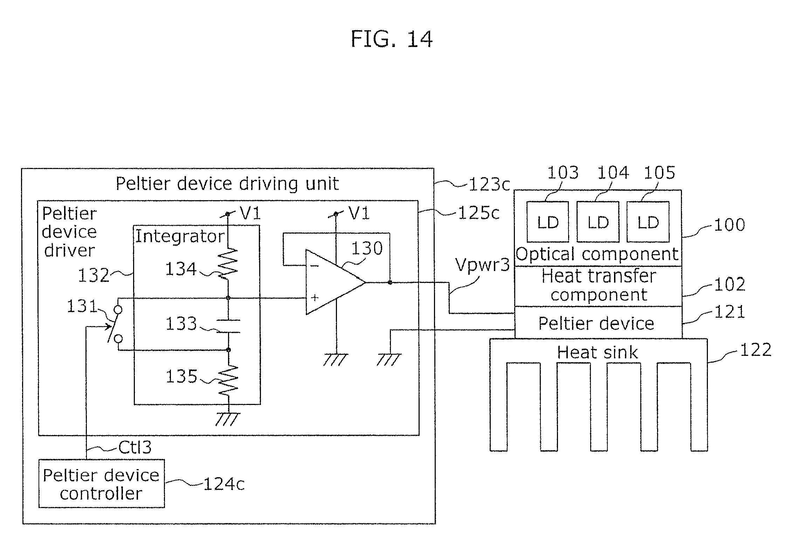

   FIG. 14 is a block diagram illustrating one specific example of a configuration of the Peltier device driving unit according to Embodiment 2.
[FIG. 15A]

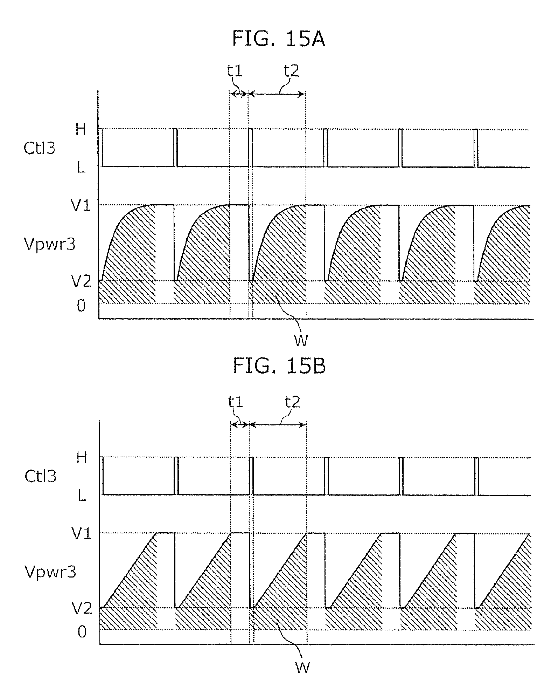

   FIG. 15A illustrates waveforms of signals and represents one example of operations performed by the Peltier device driving unit according to Embodiment 2.
[FIG. 15B]
   FIG. 15B illustrates waveforms of signals and represents one example of operations performed by the Peltier device driving unit according to Embodiment 2.
[FIG. 16]

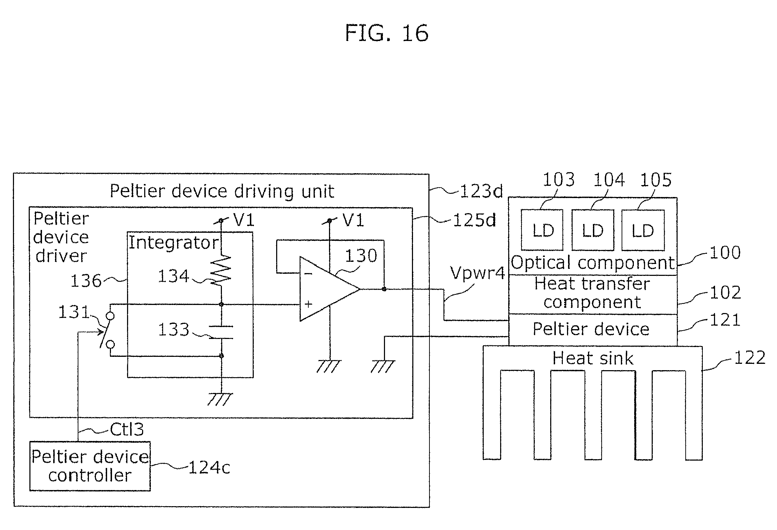

   FIG. 16 is a block diagram illustrating one specific example of a configuration of the Peltier device driving unit according to Embodiment 3.
[FIG. 17A]

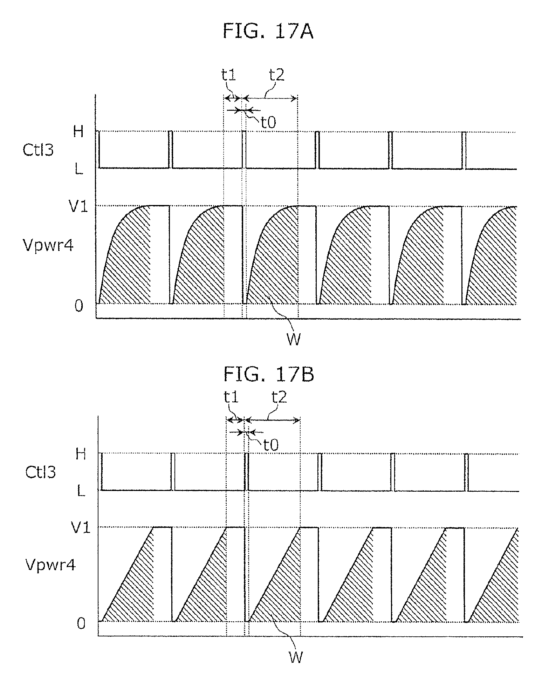

   FIG. 17A illustrates waveforms of signals and represents one example of operations performed by the Peltier device driving unit according to Embodiment 3.
[FIG. 17B]
   FIG. 17B illustrates waveforms of signals and represents one example of operations performed by the Peltier device driving unit according to Embodiment 3.

### Description of Embodiments

Hereinafter, embodiments are described in greater detail with reference to the accompanying Drawings. Each of the following embodiments describes a general or specific example. The numerical values, shapes, materials, elements, the arrangement and connection of the elements, etc., shown in the following embodiments are mere examples, and therefore do not limit the scope of the present invention. Among the elements in the following exemplary embodiments, those not recited in any one of the independent claims are described as arbitrary elements. Note that the Drawings are schematic drawings, and may not depict exact dimensions or dimensional ratios.

First, a problem that arises when a Peltier device is driven with a pulsed voltage will be described based on a Peltier device driving device according to a comparative example, and then embodiments of the present invention will be described.

### (Comparative Example)

FIG. 1 is a block diagram illustrating one example of a configuration of a Peltier device driving device as a comparative example. As illustrated in FIG. 1, a Peltier device driving device 923 is a device that supplies drive voltage to a Peltier device 121, and includes a Peltier device controller 124 and a Peltier device driver 925. In FIG. 1, as one example, the Peltier device 121 is illustrated as a device used to cool a heat generating component 900.

The Peltier device 121 has a heat-absorbing surface 121a in contact with the heat generating component 900 and a heat-releasing surface 121b in contact with a heat sink 122. The Peltier device 121 is supplied with a drive voltage Vpwr0 whose polarity is such that the Peltier device 121 absorbs heat through the heat-absorbing surface 121a and releases heat through the heat-releasing surface 121b.

The Peltier device controller 124 generates a control signal for generating a cyclic drive voltage that satisfies the required cooling ability of the Peltier device 121. The cooling ability requirement typically increases with an increase in the power supplied to the heat generating component 900 or increases with an increase in temperature of the heat generating component 900. The Peltier device controller 124 receives a signal indicating the power supplied to the heat generating component 900 and the temperature of the heat generating component 900, and generates a pulse-width modulation (PWM) control signal Ctl0 whose duty cycle increases with an increase in the power and temperature indicated in the signal.

The Peltier device driver 925 includes a DC power source 926 that generates a voltage V1 and a switch 927, and supplies the Peltier device 121 with the drive voltage Vpwr0 generated by cyclically turning the DC power source 926 on and off in accordance with the control signal Ctl0 from the Peltier device controller 124.

FIG. 2 illustrates waveforms of signals and represents one example of operations performed by the Peltier device driving device 923. As illustrated in FIG. 2, the drive voltage Vpwr0 is pulse-width modulated in accordance with the control signal Ctl0. In other words, as one example, the drive voltage Vpwr0 switches between voltage V1 and 0 volts in accordance with changes between time period t1 corresponding to the H level of the control signal Ctl0 and time period t2 corresponding to the L level of the control signal Ctl0.

FIG. 3 illustrates a problem with the Peltier device driving device 923. FIG. 3 illustrates operations in time period t1 and time period t2 when the Peltier device 121 is driven in accordance with the signal illustrated in FIG. 2. Here, it is assumed that the temperature T2 of the heat-releasing surface 121b is greater than the temperature T1 of the heat-absorbing surface 121a by a temperature difference dT, due to previous operation of the Peltier device 121.

In time period t1, the Peltier device 121 is supplied with the drive voltage Vpwr0 of voltage V1, and transfers an amount of heat Qf from the heat-absorbing surface 121a to the heat-releasing surface 121b. However, in time period t2, since the supply of power to the Peltier device 121 is completely suspended, an amount of heat Qr flows in reverse through the Peltier device 121, from the heat-releasing surface 121b to the heat-absorbing surface 121a, due to heat transfer resulting from the temperature difference dT. The amount of heat that flows in reverse increases with an increase in duty cycle (in other words, in a single cycle composed of a time period t1 and a time period t2, increases with an increase in the proportion of time period t1). The reverse flow of heat reduces the operating efficiency of the Peltier device 121, and increases the time required to reach thermal equilibrium.

Next, the temperature changes that occur in the Peltier device 121 when heat flows in reverse will be described in detail.

FIG. 4 is illustrates a change in temperature of the heat generating component 900 (i.e., a change in temperature of the heat-absorbing surface 121a in the Peltier device 121) and the waveform of the pulsed driving. In pulsed driving, the Peltier device is driven (ON) only in time period t1. In time period t1, heat transfers from the heat generating component 900 to the heat sink 122, reducing the temperature of the heat generating component 900. The driving of the Peltier device is stopped only in time period t2. This is repeated.

Cooling is performed by a Peltier device capable of achieving a cooling profile steeper than straight line L1 when the temperature of the heat generating component is to be reduced from P4 to P3 over time period t3. This is to compensate for the amount of heat generated by the heat generating component 900 in the OFF time period which increases the temperature. Thus, after the temperate decreases from P4 to P0, the temperature rises to P1 in time period t2 due to the heat generated by the heat generating component 900. This is repeated until the temperature reaches the target temperature P3 at the end of time period t3, as illustrated by the changes in the graph.

However, the actual changes in temperature are illustrated in FIG. 5. FIG. 5 is an enlarged view of FIG. 4. Temperature decreases from temperature P4 along the incline of line L2, and at the end of time period t1, reaches temperature P0 just like in FIG. 4. However, the following increase in temperature is different. In FIG. 4, temperature increases along the incline of line L3, but in actuality, temperature increases more sharply along line L4. Then, at the end of time period t2, the temperature is not temperature P1, but a higher temperature p6. As such, when this sort of pulsed driving is repeated, the change in temperature further deviates, and at the end of time period t3, the temperature does not reach temperature P3. Thus, in order to reach temperature P3 at the end of time period t3, it is necessary to achieve a decrease in temperature that follows line L7, which is steeper than line L2 (and L5 as well), with pulsed driving. By doing so, it is possible to reach the target temperature P5, and achieve a temperature of P3 at the end of time period t3.

The temperature rising to P6 rather than P1 is due to the reverse flow of heat. In this way, in order to take the reverse flow of heat into account and cause the temperature to change from temperature P4 to temperature P3 at the end of time period t3, a Peltier device having a higher cooling ability may be used, the drive current may be increased, or the length of the ON time period in the drive pulse may be increased.

Based on this knowledge, the inventors arrived at the idea of a projector including a Peltier device driving device capable of increasing the operating efficiency of the Peltier device 121 by reducing the amount of reverse flow generated in the Peltier device 121.

The projector including the Peltier device driving device according to the present invention will be described in the following embodiments.

### (Embodiment 1)

The projector according to Embodiment 1 is exemplified as a laser projector including a laser diode as a light source. For example, a laser projector used in a head-up display (HUD) scans intensity-modulated laser light onto a semi-transparent combiner provided on the windshield of a vehicle to project a virtual image representing various driving assistance information behind the combiner. The virtual image is presented to the driver in such a way that the virtual image overlaps with the field of view outside of the vehicle.

In order to achieve a high quality image with a laser projector, it is important for the temperature of the laser diode to be kept within a predetermined range. Thus, the inventors came up with the idea to efficiently cool the laser diode using the Peltier device driving device according to the present invention in a laser projector.

FIG. 6 is a block diagram illustrating one example of a functional configuration of the projector according to Embodiment 1. As illustrated in FIG. 6, the projector 1 includes an optical component 100, a display controller 110, and a temperature controller 120.

The optical component 100 includes laser diodes (LD) 103, 104, and 105, beam combiners 106 and 107, lens 108, and movable mirror 109.

The display controller 110 includes an image processing unit 111, a light source controller 112, an LD driver 113, a mirror controller 114, and a mirror driver 115.

The temperature controller 120 includes the Peltier device 121, the heat sink 122, and a Peltier device driving unit 123. The Peltier device driving unit 123 includes a Peltier device controller 124 and a Peltier device driver 125.

In the optical component 100, the LDs 103, 104, and 105 respectively emit red, green, and blue laser light (hereinafter also referred to as laser beams) intensity-modulated in accordance with a drive signal supplied from an LD driver 113.

The beam combiners 106 and 107 are, for example, dichroic prisms, and combine the laser beams from the LDs 103, 104, and 105 to converge on a single optical axis.

The lens 108 shapes the laser beams from the LDs 103, 104, and 105. More specifically, the lens 108 converts the laser beams into collimated beams, and shapes the light so as to have, in a cross section perpendicular to the path of the light, a substantially circular shape. Note that lens 108 may be composed of a plurality of lenses, and may be provided between (i) the beam combiners 106 and 107 and (ii) the LDs 103, 104, and 105.

The movable mirror 109 is, for example, a micro electro mechanical system (MEMS) mirror provided on the optical axis of a laser beam, and changes the direction of travel of a laser beam. The movable mirror 109 pivots to changing the direction of travel of the laser beam to thus scan the laser beam across the combiner (not shown in the drawings) in accordance with a drive signal supplied from the mirror driver 115. Note that the movable mirror 109 may be composed of a plurality of MEMS mirrors, and may be a polygon mirror.

In the display controller 110, the image processing unit 111 obtains an image signal. The image processing unit 111 also drives the pivoting of the movable mirror 109 via the mirror controller 114 and the mirror driver 115. Then, in order to project the virtual image indicated by the obtained image signal, the image processing unit 111 drives the movable mirror 109 and controls the strength of the laser beams emitted by the LDs 103, 104, and 105 via the light source controller 112 and the LD driver 113 in synchronization.

The image processing unit 111, the light source controller 112, and the mirror controller 114 may be realized as, for example, a single-chip microcomputer including a processor and memory. Moreover, the LD driver 113 and the mirror driver 115 may be realized as an electronic circuit including a transistor, for example.

In the temperature controller 120, the heat-absorbing surface 121a of the Peltier device 121 is in contact with a heat transfer component 102 and the heat-releasing surface 121b of the Peltier device 121 is in contact with the heat sink 122. The heat-absorbing surface 121a of the Peltier device 121 is thermally coupled to the optical component 100 (in particular, the LDs 103, 104, and 105) via the heat transfer component 102, and the heat-releasing surface 121b of the Peltier device 121 is thermally coupled to the heat sink 122. The heat transfer component 102 transfers the heat from the LDs 103, 104, and 105 to the heat-absorbing surface 121a of the Peltier device 121. The heat sink 122 transfers and disperses the heat from the heat-releasing surface 121b of the Peltier device 121 to the surrounding environment. The heat transfer component 102 and the heat sink 122 may be, for example, metal or ceramic. Here, the optical component 100 and the heat transfer component 102 are one example of the heat generating component.

The Peltier device driving unit 123 is a device that supplies drive voltage to the Peltier device 121, includes the Peltier device controller 124 and the Peltier device driver 125. The Peltier device driving unit 123 may be realized as, for example, an electronic circuit including a transistor. Here, the Peltier device driving unit 123 is one example of the controller that applies a cyclically changing voltage to the Peltier device 121 to generate a temperature difference between a first surface of the Peltier device 121 and a second surface of the Peltier device 121.

The Peltier device controller 124 generates a control signal for generating a cyclic drive voltage that satisfies the requirement of the cooling ability of the Peltier device 121.

The Peltier device driver 125 generates drive voltage that cyclically varies to a specific voltage in accordance with a control signal, and supplies the drive voltage to the Peltier device 121.

Here, the method that the Peltier device controller 124 uses to generate the control signal is not limited to a specific method. For example, the image processing unit 111 may receive a signal indicating an amount of light emission from LDs 103, 104, and 105, and the control signal may be generated such that a greater amount of power is supplied to Peltier device 121 for greater amounts of light emission as indicated by the signal. Alternatively, the temperature of the LDs 103, 104, and 105 and the temperature of the housing of the optical component 100 may be measured using a temperature sensor (not shown in the drawings), and the control signal may be generated such that a greater amount of power is supplied to the Peltier device 121 for higher levels of measured temperature. Specific examples of the control signal and the drive voltage will be described later.

Next, examples of the actual structures of the relevant components of the projector 1 will be given.

FIG. 7 is a perspective view of one example of the external appearance of the relevant components of the projector 1.

FIG. 8 is a cross sectional view taken along line A-A illustrated in FIG. 7, viewed from the direction of the arrows and including the xz plane. For ease of recognition, the cross section has been shaded and structures in the background are shown.

Note that in FIG. 7 and FIG. 8, components not directly related to temperature management and features provided for reinforcement or assembling the components together, such as ribs, bosses, screw holes, and cut-aways, for example, are omitted as necessary.

As illustrated in FIG. 7 and FIG. 8, the optical component 100, the LD 103, the lens 108, as well as the following components not illustrated in FIG. 7 and FIG. 8: LDs 104 and 105; beam combiners 106 and 107; and movable mirror 109 (see FIG. 6), are housed in a housing provided with a laser emission opening 101. The housing may be, for example, metal, ceramic, or made of a thermally resistant resin.

The LD 103 is attached to the housing using a substrate 141, an LD holder 142, and an LD plate 143. A heat transfer block 144 is thermally coupled to at least the LD plate 143 and the heat-absorbing surface 121a of the Peltier device 121. The substrate 141 and the LD holder 142 may be, for example, metal, ceramic, or made of a thermally resistant resin, and the LD plate 143 and the heat transfer block 144 may be, for example, metal or ceramic.

Heat from the LD 103 is mainly transferred to the heat-absorbing surface 121a of the Peltier device 121 via the LD plate 143 and the heat transfer block 144. In other words, the LD plate 143 and the heat transfer block 144 function as the heat transfer component 102. When some of the heat from the LD 103 transfers to the heat-absorbing surface of the Peltier device 121 via the LD holder 142, the substrate 141, and the housing of the optical component 100, the heat transfer component 102 may further include the LD holder 142, the substrate 141, and the housing of the optical component 100.

The LDs 104 and 105 also have the same structure as described above.

The Peltier device 121 is attached to the heat sink 122 via a Peltier device holder 145. The heat-releasing surface 121b of the Peltier device 121 is in contact with and thermally coupled to the heat sink 122. The Peltier device holder 145 may be, for example, metal, ceramic, or made of a thermally resistant resin.

With this structure, the heat generated by the LDs 103, 104, and 105 transfers to the heat sink 122 via the heat transfer component 102 and the Peltier device 121, and is dispersed to the surrounding environment.

Next, operations performed by the Peltier device driving unit 123 in the projector 1 will be described by providing a specific example.

FIG. 9 is a block diagram illustrating one specific example of a configuration of the Peltier device driving unit according to Embodiment 1.

The Peltier device driving unit 123a illustrated in FIG. 9 is one example of the Peltier device driving unit 123 illustrated in FIG. 6, and includes a Peltier device controller 124a and a Peltier device driver 125a.

The Peltier device controller 124a generates a control signal Ctl1 whose duty cycle increases with the cooling ability requirement of the Peltier device 121.

The Peltier device driver 125a includes a DC power source 126 that generates the first voltage V1, a DC power source 127 that generates the second voltage V2 that is less than the first voltage and greater than 0, and a switch 128. The Peltier device driver 125a supplies the Peltier device 121 with the drive voltage Vpwr1 that cyclically switches between the voltage V1 and V2 in accordance with the control signal Ctl1.

FIG. 10 illustrates waveforms of signals and represents one example of operations performed by the Peltier device driving unit 123a. As illustrated in FIG. 10, the drive voltage Vpwr1 is pulse-width modulated in accordance with the control signal Ctl1. In other words, the drive voltage Vpwr1 switches between voltage V1 and voltage V2 in a stepped manner, the voltage V1 being applied for time period t1 corresponding to the H level of the control signal Ctl1, and the voltage V2 being applied for time period t2 corresponding to the L level of the control signal Ctl1. The transition period of the drive voltage Vpwr1 between voltage V1 and voltage V2 may be, for example, shorter than 10% of the cycle.

Here, the voltage V1 is one example of the first voltage that causes the heat-absorbing surface 121a to be lower in temperature than the heat-releasing surface 121b by transferring heat from the heat generating component (the optical component 100 and the heat transfer component 102) to the heat dissipating component (the heat sink 122). Moreover, the voltage V2 is one example of the second voltage that is lower than the first voltage and prevents heat from transferring from the heat-releasing surface 121b to the heat-absorbing surface 121a. Moreover, time period t1 is one example of the first time period, and time period t2 is one example of the second time period. The transition period is included in the second time period.

In other words, the proportion of the cycle of the drive voltage Vpwr1 represented by the first time period increases with the cooling ability requirement of the Peltier device 121.

In this way, compared to the signal waveform according to the comparative example illustrated in FIG. 2 in which the drive voltage Vpwr1 in time period t2 is 0 volts, the signal waveform generated by the Peltier device driving unit 123a is voltage V2, which is lower than voltage V1 and prevents the transfer of heat from the heat-releasing surface 121b to the heat-absorbing surface 121a.

By driving the Peltier device 121 in accordance with the signal waveform illustrated in FIG. 10 using the Peltier device driving unit 123a, in time period t2, the Peltier device 121 is supplied with power W (indicated by the diagonal line shading in the drawing) in the form of the second voltage that prevents the transfer of heat from the heat-releasing surface to the heat-absorbing surface. As a result, unlike the conventional pulsed driving which includes a time period in which the supply of power to the Peltier device 121 is completely suspended, heat does not flow in reverse through the Peltier device 121 from its heat-releasing surface to its heat-absorbing surface, thereby improving the operating efficiency of the Peltier device 121.

FIG. 11 illustrates changes in temperature that occur when the above driving method is employed.

With this driving method, since the reverse flow of heat is prevented by passing a given current in time period t2 corresponding to the off time period of the conventional pulsed driving as well, temperature only rises by the amount of heat generated by the heat generating component, resulting in lines L2, L3, and L5 in the temperature graph illustrated in FIG. 11 (the solid lines in FIG. 11). In other words, in the second time period (time period t2), when the heat-absorbing surface 121a and the heat-releasing surface 121b of the Peltier device 121 are the same temperature, a rise in temperature equal to a rise in temperature generated by the heat generating component may be generated in the heat-absorbing surface 121a of the Peltier device 121.

Furthermore, by increasing the current in time period t2, as indicated by the dashed lines, cooling by an amount of temperature increase of the heat generating component itself in time period t2 is observed, whereby the temperature can be maintained.

In other words, in the second time period (time period t2), the heat-absorbing surface 121a of the Peltier device 121 may be maintained at a given temperature.

This results in a line L8 that is even less steep than line L2, which means a Peltier device having a lower ability-and thus a lower cost-can be used, and energy can be saved by, for example, reducing the drive current and/or reducing the time.

### (Variation of Embodiment 1)

In the above example, the Peltier device driving unit 123a supplies the Peltier device 121 with drive voltage Vpwr1 whose lower limit voltage is voltage V2, which is less than voltage V1 and greater than 0 volts, but the Peltier device driving unit 123a is not limited to this example. For example, the Peltier device driving unit may reduce the drive voltage to 0 volts in a specific cycle. Hereinafter, a Peltier device driving unit according to such a variation will be described.

FIG. 12 is a block diagram illustrating one specific example of a configuration of the Peltier device driving unit according to a variation of Embodiment 1.

The Peltier device driving unit 123b illustrated in FIG. 12 is one example of the Peltier device driving unit 123 illustrated in FIG. 6, and includes a Peltier device controller 124b and a Peltier device driver 125b.

Compared to the Peltier device controller 124a in FIG. 9, the Peltier device controller 124b additionally includes the function of generating a control signal Ctl2 indicating when to reduce the drive voltage to 0 volts.

Compared to the Peltier device driver 125a illustrated in FIG. 9, the Peltier device driver 125b additionally includes a switch 129, and supplies the Peltier device 121 with a drive voltage Vpwr2 that cyclically switches between voltage V1 and voltage V2 in accordance with control signal Ctl1 and decreases to 0 volts in accordance with the control signal Ctl2.

FIG. 13 illustrates waveforms of signals and represents one example of operations performed by the Peltier device driving unit 123b. As illustrated in FIG. 13, the drive voltage Vpwr2 is pulse-width modulated in accordance with the control signal Ctl1, as well as decreases to 0 volts in accordance with the control signal Ctl2. In other words, when the control signal Ctl2 is in the H level time period, the drive voltage Vpwr2 is at voltage V1 during time period t1 corresponding to the H level of the control signal Ctl1, and at voltage V2 during time period t2 corresponding to the L level of the control signal Ctl1. Moreover, when the control signal Ctl2 is in the L level time period t0, the drive voltage Vpwr2 is at 0 volts regardless of what is indicated by the control signal Ctl1.

As one example, the Peltier device controller 124b may place the control signal Ctl2 in an L level state in synchronization with the L level of the control signal Ctl1 every n^{th} cycle of the control signal Ctl1, where n is a predetermined number.

With this, a cycle for improving the operating efficiency of the Peltier device 121 by preventing the reverse flow of heat and a cycle for reducing the power consumed by the Peltier device 121 by decreasing the drive voltage to 0 volts can be used together to save energy.

Moreover, as one example, the Peltier device controller 124b may compare the duty cycle of the control signal Ctl1 (i.e., the proportion of one cycle of the control signal Ctl1 represented by the H level) to a predetermined threshold and place the control signal Ctl2 in an L level state in synchronization with the L level of the control signal Ctl1 only when the duty cycle is less than or equal to the threshold.

With this, since the time period during which heat flows in reverse is long in cycles with a low duty cycle, the reverse flow of heat can be prevented by making the lower limit voltage of drive voltage Vpwr2 voltage V2. Moreover, since the time period during which heat flows in reverse is short in cycles with a high duty cycle, energy can be saved by decreasing the drive voltage Vpwr2 to 0 volts.

### (Embodiment 2)

In the above example, the Peltier device driving unit 123a supplies the Peltier device 121 with drive voltage Vpwr1 that switches between voltage V1 and voltage V2 in a stepped manner, but the Peltier device driving unit 123a is not limited to this example. The Peltier device driving unit may, for example, supply the Peltier device with a drive voltage that continuously changes from voltage V1 to voltage V2 or vice versa in the time period t2. Hereinafter, a Peltier device driving unit according to such a variation will be described.

FIG. 14 is a block diagram illustrating one specific example of a configuration of the Peltier device driving unit according to Embodiment 2.

The Peltier device driving unit 123c illustrated in FIG. 14 is one example of the Peltier device driving unit 123 illustrated in FIG. 6, and includes a Peltier device controller 124c and a Peltier device driver 125c.

The Peltier device controller 124c generates a control signal Ctl3 indicating a pulse frequency that is lower the higher the cooling ability requirement of the Peltier device 121 is.

The Peltier device driver 125c includes a voltage follower 130, a switch 131, and an integrator 132. The integrator 132 includes a capacitor 133 and resistors 134 and 135. The switch 131 resets the integrator 132 in accordance with the control signal Ctl3. The voltage follower 130 supplies the Peltier device 121 with drive voltage Vpwr3 that is equal to the output voltage of integrator 132.

FIG. 15A illustrates waveforms of signals and represents one example of operations performed by the Peltier device driving unit 123c. As illustrated in FIG. 15A, the drive voltage Vpwr3 is pulse-frequency modulated in accordance with the control signal Ctl3. In other words, in a time period in which the control signal Ctl3 is in an H level state, the drive voltage Vpwr3 is voltage V2 obtained as a result of voltage V1 being voltage divided by resistors 134 and 135 by the switch 131 being in a conductive state. Moreover, when the control signal Ctl3 is in an L level state, the drive voltage Vpwr3 curves upward from voltage V2 toward voltage V1 in accordance with a time constant of the integrator 132 by the switch 131 being in a non-conductive state.

Here, voltage V1 is one example of the first voltage that causes the heat-absorbing surface 121a to be lower in temperature than the heat-releasing surface 121b by transferring heat from the heat generating component (the optical component 100 and the heat transfer component 102) to the heat dissipating component (the heat sink 122). Moreover, the voltage that is lower than voltage V1 and greater than or equal to voltage V2 is one example of the second voltage that is lower than the first voltage and prevents heat from transferring from the heat-releasing surface 121b to the heat-absorbing surface 121a. Moreover, the time period t1 during which the drive voltage Vpwr3 is voltage V1 is one example of the first time period, and the time period t2 during which the drive voltage Vpwr3 is a voltage that is lower than voltage V1 and greater than or equal to voltage V2 is one example of the second time period. The transition period during which drive voltage Vpwr3 decreases from voltage V1 toward voltage V2 is included in the second time period.

Note that, in actuality, a voltage that is substantially equal to voltage V1 (for example, a voltage 90% or more of voltage V1) may be defined as the first voltage. Moreover, for example, the time from when the drive voltage Vpwr3 becomes a voltage substantially equal to voltage V1 (for example, a voltage 90% or more of voltage V1) to when the control signal Ctl3 enters the L level state may be defined as the time period t1 in which the drive voltage Vpwr3 is voltage V1.

FIG. 15B illustrates waveforms of signals and represents one example of operations performed by the Peltier device driving unit 123c. The signal waveforms illustrated in FIG. 15B are obtained by using a constant current element such as a transistor that operates in a saturation mode as the resistor 134 of the integrator 132 in FIG. 14. In this case, the drive voltage Vpwr3 in time period t2 (i.e., the second voltage) increases in a straight line from voltage V2 toward voltage V1.

In other words, the drive voltage Vpwr3 is a voltage that decreases to the lower limit voltage at a frequency that decreases with an increase in the cooling ability requirement of the Peltier device 121. The second voltage of drive voltage Vpwr3 either increases from voltage V2, which is the lower limit voltage, toward voltage V1, which is the first voltage, along a curved line (FIG. 15A) or along a straight line (FIG. 15b). The lower limit voltage of drive voltage Vpwr3 is greater than 0 volts in all cycles.

By driving the Peltier device 121 in accordance with the signal waveform illustrated in FIG. 15A or FIG. 15B using the Peltier device driving unit 123c, in time period t2, the Peltier device 121 is supplied with power W (indicated by the diagonal line shading in the drawings) in the form of the second voltage that prevents the transfer of heat from the heat-releasing surface to the heat-absorbing surface. As a result, unlike the conventional pulsed driving which includes a time period in which the supply of power to the Peltier device 121 is completely suspended, heat does not flow in reverse through the Peltier device 121 from its heat-releasing surface to its heat-absorbing surface, thereby improving the operating efficiency of the Peltier device 121.

### (Embodiment 3)

In the above example, the Peltier device driving unit supplies the Peltier device 121 with drive voltage whose lower limit is voltage V2, which is typically greater than 0 volts but lower than 0 volts in particular cycles, but the Peltier device driving unit is not limited to this example. For example, the Peltier device driving unit may reduce the drive voltage to 0 volts in all cycles. Hereinafter, a Peltier device driving unit according to such a variation will be described.

FIG. 16 is a block diagram illustrating one specific example of a configuration of the Peltier device driving unit according to Embodiment 3.

The Peltier device driving unit 123d illustrated in FIG. 16 is one example of the Peltier device driving unit 123 illustrated in FIG. 6, and differs from the Peltier device driving unit 123c in regard to an integrator 136 of a Peltier device driver 125d.

The integrator 136 is achieved by removing the resistor 135 from the integrator 132, which reduces the output voltage lower limit to 0 volts.

FIG. 17A illustrates waveforms of signals and represents one example of operations performed by the Peltier device driving unit 123d. As illustrated in FIG. 17A, the drive voltage Vpwr4 reduces to 0 volts when the control signal Ctl3 indicates an H level, which is in the time period t0, and increases from 0 volts toward voltage V1 along a curved line when the control signal Ctl3 indicates an L level.

Here, the voltage V1 is one example of the first voltage, and the voltage lower than the voltage V1 is one example of the second voltage. Moreover, the time period t1 during which the drive voltage Vpwr4 is voltage V1 is one example of the first time period, and the time period t2 during which the drive voltage Vpwr4 is a voltage lower than voltage V1 is one example of the second time period. The transition period during which drive voltage Vpwr4 decreases from voltage V1 toward 0 volts is included in the second time period.

Note that, in actuality, a voltage that is 90% or more of voltage V1 may be defined as the first voltage. Moreover, for example, the time from when the drive voltage Vpwr4 becomes 90% or more of voltage V1 to when the control signal Ctl3 enters the L level state may be defined as the time period t1 in which the drive voltage Vpwr4 is voltage V1.

FIG. 17B illustrates waveforms of signals and represents one example of operations performed by the Peltier device driving unit 123d. The signal waveforms illustrated in FIG. 17B are obtained by using a constant current element such as a transistor that operates in a saturation mode as a resistor 134 of the integrator 136 in FIG. 16. In this case, the drive voltage Vpwr4 in time period t2 (i.e., the second voltage) increases in a straight line from 0 volts toward voltage V1.

In other words, the drive voltage Vpwr4 is a voltage that decreases to the lower limit voltage at a frequency that decreases with an increase in the cooling ability requirement of the Peltier device 121. The second voltage of drive voltage Vpwr4 either increases from 0 volts, which is the lower limit voltage, toward voltage V1, which is the first voltage, along a curved line (FIG. 17A) or along a straight line (FIG. 17b). The lower limit voltage of drive voltage Vpwr4 is 0 volts in all cycles.

By driving the Peltier device 121 in accordance with the signal waveform illustrated in FIG. 17A or FIG. 17B using the Peltier device driving unit 123d, in time period t2, the Peltier device 121 is supplied with power W (indicated by the diagonal line shading in the drawings) in the form of the second voltage that prevents the transfer of heat from the heat-releasing surface to the heat-absorbing surface. As a result, unlike the conventional pulsed driving which includes a time period in which the supply of power to the Peltier device 121 is completely suspended, heat does not flow in reverse through the Peltier device 121 from its heat-releasing surface to its heat-absorbing surface, thereby improving the operating efficiency of the Peltier device 121.

A projector has hereinbefore been described according to exemplary embodiments, but the projector is not limited to individual embodiments. Various modifications of the exemplary embodiments as well as embodiments resulting from arbitrary combinations of elements of different exemplary embodiments that may be conceived by those skilled in the art are intended to be included within the scope of the claims as long as they do not depart from the essence of the teachings of the present disclosure.

For example, in the above examples, the Peltier device is described as a device used to cool a heat generating component, but by inverting the voltage supplied to the Peltier device, the Peltier device may be used to heat an object. Even when the Peltier device is used to heat an object, the reverse flow of heat still occurs as when the Peltier device is used to cool the heat generating component. As such, the present teachings can still be used to efficiently drive a Peltier device even when the Peltier device is used to, for example, heat an object inside a projector.

### Industrial Applicability

The present invention can be applied to a wide variety of devices including objects to be cooled or heated, such as a projector.

### Reference Signs List

- 1: projector
- 100: optical component
- 101: laser emission opening
- 102: heat transfer component
- 103, 104, 105: LD (laser diode)
- 106, 107: beam combiner
- 108: lens
- 109: movable mirror
- 110: display controller
- 111: image processing unit
- 112: light source controller
- 113: LD driver
- 114: mirror controller
- 115: mirror driver
- 120: temperature controller
- 121: Peltier device
- 121a: heat-absorbing surface
- 121b: heat-releasing surface
- 122: heat sink
- 123, 123a, 123b, 123c, 123d: Peltier device driving unit
- 124, 124a, 124b, 124c: Peltier device controller
- 125, 125a, 125b, 125c, 125d: Peltier device driver
- 126, 127: DC power source
- 128, 129, 131: switch
- 130: voltage follower
- 132, 136: integrator
- 133: capacitor
- 134, 135: resistor
- 141: substrate
- 142: LD holder
- 143: LD plate
- 144: heat transfer block
- 145: Peltier device holder
- 900: heat generating component
- 923: Peltier device driving device
- 925: Peltier device driver
- 926: DC power source
- 927: switch

## Claims

1. A projector, comprising:
an optical component including a light source;
a display controller that performs display control;
a Peltier device in contact with the optical component; and
a controller that applies a first voltage to the Peltier device in a first time period of a cycle and applies a second voltage lower than the first voltage to the Peltier device in a second time period of the cycle.

2. The projector according to claim 1, wherein the controller applies a voltage that switches between the first voltage and the second voltage in a stepped manner.

3. The projector according to claim 2, wherein the first time period of the voltage applied by the controller is a variable percentage of the cycle.

4. The projector according to claim 2 or 3, wherein the second voltage is greater than 0 volts in a first cycle and 0 volts in a second cycle.

5. The projector according to claim 4, wherein the second voltage is 0 volts every nth cycle, where n is a predetermined number.

6. The projector according to claim 1, wherein in the second time period, the second voltage applied by the controller continuously changes between the first voltage and a lower limit voltage.

7. The projector according to claim 6, wherein the controller applies a voltage that decreases to the lower limit voltage at a variable frequency.

8. The projector according to claim 6 or 7, wherein the second voltage increases from the lower limit voltage up to the first voltage in a curved line.

9. The projector according to claim 6 or 7, wherein the second voltage increases from the lower limit voltage up to the first voltage in a straight line.

10. The projector according to any one of claims 6 to 9, wherein the lower limit voltage is greater than 0 volts in all cycles.

11. The projector according to any one of claims 6 to 9, wherein the lower limit voltage is 0 volts in all cycles.

12. The projector according to any one of claims 1 to 11, wherein
the Peltier device has a first surface in contact with a heat generating component and a second surface in contact with a heat dissipating component, and
in the second time period, when the first surface and the second surface are a same temperature, a rise in temperature equal to a rise in temperature generated by the heat generating component is generated in the first surface.

13. The projector according to any one of claims 1 to 11, wherein
the Peltier device has a first surface in contact with a heat generating component and a second surface in contact with a heat dissipating component, and
in the second time period, the first surface is maintained at a given temperature.

14. The projector according to any one of claims 1 to 13, wherein
the Peltier device has a first surface in contact with a heat generating component and a second surface in contact with a heat dissipating component,
the heat generating component is the optical component, and
the heat dissipating component is a heat sink.

15. A driving method for a projector including an optical component including a light source, a display controller that performs display control, and a Peltier device in contact with the optical component, the method comprising
applying a first voltage to the Peltier device in a first time period of a cycle and applying a second voltage lower than the first voltage to the Peltier device in a second time period of the cycle.
